# EUROPÄISCHE PATENTSCHRIFT

(11) **EP 3 698 441 B1**
(45) Veröffentlichungstag und Bekanntmachung des Hinweises auf die Patenterteilung: **10.08.2022**
(21) Anmeldenummer: 17784638.3
(22) Anmeldetag: 16.10.2017
(51) Int. Cl.: H01R 43/02, B23K 20/10, H01R 4/02

(54) **VORRICHTUNG UND VERFAHREN ZUM ULTRASCHALLVERBINDEN VON ELEKTRISCHEN LEITERN**
DEVICE AND METHOD FOR ULTRASOUND CONNECTION OF ELECTRICAL CONDUCTORS
DISPOSITIF ET PROCÉDÉ POUR L'ASSEMBLAGE PAR ULTRASONS DE CONDUCTEURS ÉLECTRIQUES

(43) Veröffentlichungstag der Anmeldung: 26.08.2020
(73) Patentinhaber: Telsonic Holding AG, 9552 Bronschhofen (CH)
(72) Erfinder: HUBER, Christian, 9542 Münchwilen (CH); LITVINAS, Arvydas, 8610 Uster (CH)
(74) Vertreter: Hepp Wenger Ryffel AG
(86) Internationale Anmeldenummer: PCT/EP2017/076351
(87) Internationale Veröffentlichungsnummer: WO 2019/076433

(56) Entgegenhaltungen:
- WO-A1-2014/161715
- DE-A1-102011 014 801
- DE-A1-102015 117 020
- DE-B3-102013 209 314

## Beschreibung

Die Erfindung betrifft eine Vorrichtung und ein Verfahren zum Ultraschallverbinden von elektrischen Leitern, sowie eine Verwendung eines Schieberelements zum Ultraschallverbinden von Gruppen von Leitern.

Vorrichtungen zum Ultraschallverbinden sind z.B. als mobile Handgeräte sowie als stationäre Geräte bekannt und kommen bevorzugt zum Verschweissen von länglichem Schweissgut wie z.B. elektrischen Leitern wie Litzen zum Einsatz. Ein Leiter kann mehrere Einzeldrähte umfassen.

Die zu verschweissenden Leiter, insbesondere die abisolierten freien Enden der Leiter, werden typischerweise in einen Verdichtungsraum eingebracht, in welchem die Leiter in Kontakt miteinander gebracht werden und mit Ultraschallschwingungen beaufschlagt werden. Der Verdichtungsraum ist in der Regel in lateraler Richtung, d.h. in einer Richtung quer zu einem lichten Durchtrittsbereich für das Schweissgut, zumindest einseitig von einer Arbeitsfläche einer Sonotrode begrenzt. Typischerweise wird die Sonotrode mittels eines Ultraschall-Konverters z.B. zu longitudinalen oder torsionalen Ultraschallschwingungen angeregt. Über die im Allgemeinen profilierte Arbeitsfläche werden die Schwingungen der Sonotrode auf das Schweissgut, zum Beispiel die Leiterenden, übertragen. Der Arbeitsfläche der Sonotrode gegenüberliegend ist in der Regel eine Ambossfläche einer Gegenelektrode oder eines Ambosses angeordnet. Zudem kann der Verdichtungsraum durch Begrenzungsflächen seitlicher Begrenzungselemente und/oder Schieberelemente zusätzlich begrenzt sein, sodass der Verdichtungsraum zumindest beim Verschweissen weitgehend vollständig in lateraler Richtung umschlossen ist. Der Verdichtungsraum kann beispielsweise derart verstellbar ausgebildet sein, dass das Schweissgut durch Verringerung der Querschnittsfläche des lichten Durchtritts während des Schweissens verdichtet werden kann. Dies kann z.B. durch relative Verschiebung des Schieber- und/oder Begrenzungselements und/oder des Ambosses bezüglich der Schweissfläche erreicht werden.

Der Amboss, das Begrenzungselement und/oder das Schieberelement können dabei derart beweglich gelagert sein, dass vor oder nach einem Schweissvorgang eine Einlege- bzw. Entnahmeöffnung erzeugt werden kann, an welcher der Verdichtungsraum in lateraler Richtung offen ist. Auf diese Weise kann das Schweissgut in den Verdichtungsraum eingelegt und wieder aus diesem entnommen werden.

WO 2014/161715 A1 offenbart eine betrifft eine Vorrichtung zum Verschweissen von Schweissgut, bei welcher wenigstens eine der Begrenzungsflächen derart beweglich ausgebildet, dass eine Ausrichtung relativ zur gegenüberliegenden Begrenzungsfläche beim Übergang von einer Einlegeposition in die Schweissposition veränderbar ist.

Sollen Kabel, das heisst gebündelte Leiter, in Längsrichtung miteinander verbunden werden, die nicht nur jeweils freie Enden aufweisen, sondern die bereits miteinander verbunden sind, von denen zum Beispiel ein Teil der Leiter bereits eine Verbindung in Längsrichtung aufweist, so kann sich das Einlegen der Leiter in den Verdichtungsraum schwierig gestalten. Es muss sichergestellt werden, dass die Leiter mit der bereits bestehenden Verbindung nicht in den Verdichtungsraum gelangen.

Diese Schwierigkeit tritt beispielsweise auf, wenn drei Kabel mit je zwei Leitern derart verbunden werden sollen, dass die Leitungen von zwei Kabeln in einem Kabel weitergeführt werden und so zwei parallele Y-Verbindungsstellen oder Y-Knoten erstellt werden sollen. Für jede der zwei Y-Knoten müssen jeweils zwei Leiter von einer Seite und ein Leiter von der gegenüberliegenden Seite in den Verdichtungsraum geführt werden und alle anderen Leiter vom Verdichtungsraum ferngehalten werden.

Diese Schwierigkeit tritt ebenfalls auf, wenn vier Kabel mit je zwei Leitern derart verbunden werden sollen, dass jeweils zwei Kabel von gegenüberliegenden Seiten an den Verdichtungsraum geführt werden und zwei parallele X-Verbindungsstellen oder X-Knoten zu erstellen sind. In jedem der X-Knoten laufen vier Leiter, die jeweils zu einem der Kabel gehören, zusammen. Die Leiter können jeweils Gruppen von Leitungsdrähten umfassen.

Derartige Verbindungen werden für geschirmte und/oder mehradrige Hochspannungskabel benötigt, zum Beispiel mit Kupferleitern oder Aluminiumleitern.

Derartige Verbindungen können für verdrillte Leitungen, abgeschirmte Leitungen, abgeschirmte und verdrillte Leitungen, sowie abgeschirmten Kabel gewünscht sein. Häufig ist es notwendig, die Abisolierlänge, die Länge der entfernten Abschirmung und/oder die Entdrilllänge kurz zu halten, um Störungen der elektromagnetischen Verträglichkeit (EVM) zu vermeiden oder verringern.

Derartige Verbindungen können auch zum Tragen kommen, wenn einer der Leiter kein Leiterdraht ist, sondern ein Kontaktteil, das mit einem gegenüberliegenden Leiter verbunden werden soll.

Die bestehenden Verbindungen oder auch nicht zu verschweissende Enden müssen von dem Verdichtungsraum ferngehalten werden. Beim manuellen Einlegen kann dies gewährleistet werden, indem der Bediener die entsprechenden Leiter von dem Verdichtungsraum weghält. Gewöhnlich wird der Verdichtungsraum jedoch während der Verkleinerung des Verdichtungsraums und während der Ultraschallbeaufschlagung zum Schutz des Bedieners von einer Schutzhaube abgedeckt. Die nicht zu verschweissenden Enden und/oder die bestehenden Verbindungen können dann also nicht mehr ohne Weiteres festgehalten werden. Es kann daher nicht zuverlässig sichergestellt werden, dass die zusätzlichen Stränge nicht in den Verdichtungsraum geraten.

Der Strang wird daher in der Regel in grossem Abstand um den Verdichtungsraum herumgeführt und eine gemeinsame Abschirmung muss auf einer langen Strecke um die Verbindungsstelle entfernt werden und/oder eine Verdrillung muss auf einer langen Strecke um die Verbindungsstelle aufgehoben werden.

DE 10 2011 014 801 A1 betrifft ein Verfahren zum Verschweissen von Leitern, insbesondere zur Herstellung eines Kabelbaums eines Fahrzeugbordnetzes. Es ist ein Verfahren gezeigt, bei dem Knoten, die mehrere Leiter miteinander verbinden, mit weiteren Leitern verschweisst werden.

DE 10 2013 209 314 B3 zeigt ein Verfahren zum elektrischen Verbinden einer elektrischen Leitung mit einem Kontaktteil. Dabei wird zunächst ein erster Teil einer geteilten Litze mit einem Kontaktteil verschweisst und anschliessend der zweite Teil der geteilten Litze mit dem Kontaktteil verschweisst.

DE 10 2015 117020 A1 offenbart zwei verbundene Leitungsstränge, die jeweils Einzelleitungen aufweisen. In einem zum Anschlussabschnitt benachbarten Abschnitt sind Dichtungen vorgesehen.

Es ist daher die Aufgabe der Erfindung, die Nachteile des Standes der Technik zu überwinden. Insbesondere ist es eine Aufgabe der Erfindung, eine Vorrichtung, ein Verfahren zum Verschweissen sowie eine Leiteranordnung bereitzustellen, welche bei gleichzeitig komfortabler Handhabung ein einfaches und zuverlässiges Verbinden auch von Kabeln mit mehreren parallel verlaufenden Strängen ermöglichen, ohne dass die Abschirmung und/oder die Verdrillung auf einer grösseren Länge aufgehoben werden muss.

Diese Aufgaben werden insbesondere durch die Merkmalskombinationen der unabhängigen Ansprüche gelöst.

Die Aufgabe wird gelöst durch eine Vorrichtung zum Ultraschallverbinden von elektrischen Leitern. Bei der Vorrichtung handelt es sich insbesondere um eine halbautomatische Vorrichtung, bei welcher die Leiter manuell herangeführt und eingelegt werden müssen.

Die Vorrichtung weist einen Verdichtungsraum zur Aufnahme der Leiter auf. Insbesondere können abisolierte Enden von Leitungsdrähten oder Litzen in den Verdichtungsraum eingebracht werden. Es können auch Leiter mit Zwischenausisolierungen in den Verdichtungsraum gebracht werden.

Der Verdichtungsraum ist in einer Schweissposition von Abschnitten aneinander angrenzender Begrenzungsflächen begrenzt. Diese Begrenzungsflächen umfassen zumindest eine Arbeitsfläche einer ultraschall-übertragenden Sonotrode und eine der Arbeitsfläche gegenüberliegend angeordneten Ambossfläche, welche an einem Amboss angeordnet ist.

Während des Schweissvorgangs werden Ultraschallschwingungen von der Arbeitsfläche auf die Leitungen übertragen.

Die Vorrichtung weist insbesondere eine Schutzhaube auf, die über den Verdichtungsraum bewegt werden kann, so dass dieser in der Schweissposition abgedeckt ist. Die Schutzhaube ist derart ausgebildet ist, dass die Leiter von einem Aussenbereich der Vorrichtung in den Verdichtungsraum verlaufen können, wenn die Schutzhaube den Verdichtungsraum in der Schweissposition abdeckt.

Die Schutzhaube ist bevorzugt quer zur Durchtrittsrichtung der Leiter über den Verdichtungsraum in eine geschlossene Stellung verschiebbar.

Die Schutzhaube kann ein Sichtfenster aufweisen, welches in der geschlossenen Stellung oberhalb des Verdichtungsraums angeordnet ist und welches eine visuelle Überprüfung des Schweissvorgangs erlaubt.

Erfindungsgemäss ist mindestens ein Rückhalteelement vorgesehen, zum Fernhalten mindestens eines Stranges vom Verdichtungsraum. Der Strang ist mit zumindest einem Teil der zu verbindenden Leiter verbunden. Bevorzugt handelt es sich um einen Leiterstrang. Die Vorrichtung ist derart ausgebildet, dass das Rückhalteelement den Strang zumindest während des Ultraschallverbindens vom Verdichtungsraum fernhält.

Der zurückzuhaltende Leiterstrang und die zu verbindenden Leiter können jeweils zu gemeinsamen Kabeln gehören. Der zurückzuhaltende Strang kann insbesondere eine zuvor hergestellte Schweissverbindung umfassen oder auch freie Enden, die nicht zu verschweissen sind. Der Strang kann auch ein Kontaktteil oder mehrere Kontaktteile umfassen, die bereits mit einem oder mehreren Leitern eines Kabels verbunden sind.

Bei dem Rückhalteelement kann es sich um ein aktives oder passives Element handeln. Es kann sich beispielsweise um ein Klemmelement, eine Klammer oder einen Haken handeln, mit welchen der Strang von dem Verdichtungsraum weggezogen wird. Es kann sich auch um ein Stosselement handeln, welches den Strang von dem Verdichtungsraum wegdrückt.

Ein aktives Rückhaltelement kann ein bewegliches Fixierelement umfassen. Soll der Strang in einer bestimmten Parkposition gehalten werden, so kann das Fixierelement aktiviert werden. Das Fixierelement kann als Klammer, Klemme oder Riegel ausgeführt sein.

Die Aktivierung kann mechanisch geschehen, zum Beispiel durch das Verschieben oder Umlegen des Fixierelements. Alternativ kann das Rückhaltelement beispielsweise elektrisch oder elektronisch von einer Rückhaltesteuerung aktivierbar sein. Zusätzlich kann die Rückhaltesteuerung zum Erzeugen eines Signals ausgelegt sein, das an eine Steuerung des Ultraschallerzeugers weiterleitbar ist, so dass der Schweissprozess nicht beginnt, bevor das Rückhaltelement aktiviert ist.

Für ein Entnehmen des Stranges ist das Rückhaltelement insbesondere wieder deaktivierbar.

Bevorzugt weist die Vorrichtung eine Schutzhaube auf, die derart ausgebildet ist, dass der zurückzuhaltende Strang von einem Aussenbereich der Vorrichtung in die Vorrichtung verläuft, wenn die Schutzhaube den Verdichtungsraum in der Schweissposition abdeckt.

Der zurückzuhaltende Strang kann insbesondere von einer Seite der Vorrichtung auf die andere Seite der Vorrichtung führen und während des Schweissens, wenn die Schutzhaube den Verdichtungsraum in der Schweissposition abdeckt, von der einen Seite der Schutzhaube durch die Schutzhaube auf die andere Seite der Schutzhaube führen.

Die Vorrichtung bietet mit dem Rückhalteelement und insbesondere mit der Schutzhaube eine Parkposition für Stränge, zum Beispiel für bestehende Verbindungen oder auch nicht zu verschweissende Enden, in der die Stränge eine definierte Position einnehmen und von dem Verdichtungsraum ferngehalten werden.

Die Schutzhaube erlaubt eine Aufnahme des Strangs. Der Strang muss also während des Schweissens nicht an der Schutzhaube vorbei geführt werden. Die Vorrichtung ermöglicht daher eine Positionierung des zurückzuhaltenden Strangs in der Nähe des Verdichtungsraums.

Es können somit freie Enden von Kabeln verbunden werden, die bereits verbundene Enden parallel verlaufender Leiter aufweisen, da diese Leiter zuverlässig in einer Parkposition gehalten werden können.

Der Verdichtungsraum weist einen lichten Durchtritt auf, durch welchen die Leiter z.B. in den Verdichtungsraum hineinragen oder durch den Verdichtungsraum hindurchragen können. Der lichte Durchtritt ist in der Regel zumindest in der Schweissposition in lateraler Richtung, d.h. im Wesentlichen quer zur Durchtrittsrichtung, von den Begrenzungsflächen begrenzt und weitgehend vollständig umschlossen.

Bevorzugt sind die Begrenzungsflächen in eine Anordnung bringbar, in welcher eine Einlegeöffnung gebildet ist. Die Einlegeöffnung der Einlegeposition versteht sich als laterale Zugangsöffnung zum Verdichtungsraum, durch welche die Leiter in der typischerweise weitgehend quer zur Durchtrittsrichtung gerichteten Einlegerichtung in den Verdichtungsraum eingelegt werden können.

In der Regel wird die Einlegeöffnung durch Änderung der Anordnung wenigstens einer der Begrenzungsflächen, insbesondere der Ambossfläche, geschaffen.

In der Schweissposition kann während des Schweissvorgangs der lichte Durchtritt des Verdichtungsraums im Querschnitt verringert werden.

In der Regel sind die Begrenzungsflächen weitgehend eben, wobei z.B. Profilierungen oder andere Strukturierungen der Flächen vorhanden sein können. Grundsätzlich ist es je nach Erfordernis allerdings auch denkbar, dass die Begrenzungsflächen z.B. gekrümmt sein können.

In einer vorteilhaften Ausführung der Vorrichtung umfassen die Begrenzungsflächen eine Schieberfläche, welche an einem Schieberelement angeordnet ist, und insbesondere eine der Schieberfläche gegenüberliegend angeordnete Seitenfläche, welche an einem seitlichen Begrenzungselement angeordnet ist.

Die Schieberfläche und die Seitenfläche können aufeinander zu bewegbar sein, um die Querschnittsfläche des Verdichtungsraums vor dem oder während des Schweissens zu verkleinern.

Die Seitenfläche und/oder die Schieberfläche können weitgehend senkrecht zur Arbeitsfläche angeordnet sein.

Das Rückhalteelement ist insbesondere an dem Schieberelement angeordnet.

Das Schieberelement kann zum Beispiel eine von der Schieberfläche wegweisenden Rückhaltefläche aufweisen, die zum Beispiel an einem auf dem Schieberelement vorstehenden Element angeordnet ist, welches als Rückhalteelement wirkt. Das vorstehende Element kann einen Aufnahmeraum für den wegzuhaltenden Strang definieren und den Strang von dem Verdichtungsraum wegdrücken.

In einer vorteilhaften Ausführung umfasst die Vorrichtung ein Schieberelement mit Schieberfläche und Rückhaltelement. Das Rückhalteelement weist eine von dem Verdichtungsraum wegweisende Rückhaltefläche auf, die parallel zur Schieberfläche angeordnet ist, und bevorzugt nah an der Schieberfläche angeordnet ist. Das Rückhalteelement ist fest mit dem Schieberelement verbunden und kann mit dem Schieberelement mitbewegt werden. Der zurückzuhaltende Strang kann daher einen geringen Abstand zu dem Verdichtungsraum einnehmen. Es ist daher möglich, auch einen Strang zu positionieren, der durch kurze aus einem Kabel vorstehende Leiterenden gebildet wird.

Insbesondere weist das Schieberelement eine Auflagefläche für den abzulegenden Strang auf, die derartig ausgebildet ist, dass ein abgelegter Strang dort verbleibt, bis er wieder entnommen wird, auch wenn das Schieberelement bewegt wird. Es kann das Rückhalteelement entsprechend ausgebildet sein, zum Beispiel als aktives Element, welches den Strang fixiert. Alternativ oder zusätzlich kann die Auflagefläche als Vertiefung in dem Schieberelement ausgebildet sein, in welcher der Strang aufgenommen wird.

In einer vorteilhaften Ausbildung umfasst die Vorrichtung ein Schieberelement mit Schieberfläche, wobei das Schieberelement einen von der Schieberfläche wegweisenden Montagebereich aufweist. Der Montagebereich kann Verbindungsmittel umfassen, die zur Befestigung des Schieberelements an einer maschinenseitigen Aufnahme dienen, über welche das Schieberelement in eine Bewegung versetzt werden kann.

Typischerweise erstreckt sich das Rückhalteelement, zum Beispiel ein vorstehendes Element, in eine Richtung, die senkrecht zu der Richtung steht, in welche die Schieberfläche weist.

Das Rückhalteelement kann unmittelbar an den Montagebereich anschliessen, so dass der wegzuhaltende Strang auf dem Montagebereich abgelegt werden kann.

Bevorzugt umfasst das Schieberelement eine Auflagefläche für den mindestens einen wegzuhaltenden Strang, die als Absenkung im Montagebereich ausgebildet ist. Der wegzuhaltende Strang kann dann in der Regel näher an den Abschnitt der Schieberfläche herangebracht werden, welcher eine Begrenzungsfläche des Verdichtungsraums bildet. Der Abstand zwischen Verdichtungsraum und Auflagefläche ist also geringer als bei einer nicht abgesenkten Auflagefläche.

In einer vorteilhaften Ausbildung umfasst die Vorrichtung ein Schieberelement mit Schieberfläche, wobei das Schieberelement eine Ausnehmung aufweist, in welcher ein Einsatz platziert werden kann.

Das Rückhaltelement kann an dem Schieber ausgebildet sein oder an einem Einsatz, der in der Ausnehmung platzierbar ist.

In die Ausnehmung kann zum Beispiel ein Einsatz eingelegt werden, der eine Auflagefläche für einen Strang bietet.

Der Einsatz kann beispielweise eine Nut aufweisen.

Die Nut kann so tief sein, dass ein Strang in der Nut zurückgehalten wird. Auf dem Einsatz oder dem Schieber kann alternativ oder zusätzlich ein vorstehenden Element angebracht sie, das als Barriere zum Verdichtungsraum wirkt.

Der Einsatz kann auch eine Ausnehmung aufweisen, deren Kontur mit der Aussenkontur eines Kontaktteils korrespondiert, so dass das Kontaktteil in den Einsatz einlegbar ist.

Der Einsatz kann auswechselbar sein. Es kann ein Einsatz mit einer Nut eingelegt werden, deren Querschnittsfläche und/oder Durchmesser an die Querschnittsfläche und/oder den Durchmesser des zu verarbeitenden Strangs angepasst ist.

Es können Befestigungsmittel zum Befestigen des Einsatzes in der Ausnehmung des Schieberelements vorgesehen sein, zum Beispiel für eine Schraubverbindung. Es kann auch ein Formschluss zwischen Einsatz und Ausnehmung herstellbar sein, wenn zum Beispiel die Ausnehmung als Schiebekulisse für eine am Einsatz ausgebildete komplementäre Struktur ausbildet ist.

In einer vorteilhaften Ausführung der Vorrichtung umfasst die Schutzhaube mindestens einen ersten Durchlass zum Durchführen der zu verbindenden Leiter und insbesondere mindestens eine erste Anlegekante zum Ausrichten der Leiter.

Der Durchlass kann in Form einer Öffnung, einer Ausnehmung, einer Klappe oder eines elastischen Elements vorliegen und ermöglicht das Heranführen der Leiter von einem Aussenbereich der Schutzhaube in den Verdichtungsraum, wenn dieser von der Schutzhaube abgedeckt ist.

Die Anlegekante kann in dem Durchlass angeordnet sein. Die Schutzhaube deckt den Verdichtungsraum ab, damit ein Bediener nicht in die Nähe des Verdichtungsraums kommt. Ein Bediener kann daher auch die Leiter nicht mehr in der Nähe des Verdichtungsraums festhalten. Die Anlegekante kann die Leiter in Richtung eines Anschlags drücken und damit eine Halte- und/oder Ausrichtfunktion übernehmen, die gewährleistet, dass die Leiter nicht verrutschen, wenn die Vorrichtung in der Schweissposition ist.

Zusätzlich weist die Schutzhaube mindestens eine weitere Anlegekante zum Ausrichten des mindestens einen zurückzuhaltenden Stranges auf. Für den Strang gilt ebenfalls, dass er nicht mehr von einem Bediener festgehalten werden kann, wenn die Schutzhaube schliesst, also den Verdichtungsraum abdeckt. Die weitere Anlegekante kann den Strang in Richtung eines Anschlags drücken und damit den Strang halten und/oder ausrichten.

Die weitere Anlegekante kann in demselben Durchlass angeordnet sein, wie eine erste Anlegekante, oder es kann ein weiterer Durchlass vorgesehen ist, durch welchen der Strang führbar ist.

Bevorzugt weist die Schutzhaube beidseitig einen Durchlass für Leiter auf, so dass Leiter von gegenüberliegenden Seiten in den Verdichtungsraum verlaufen können, und beidseitig erste und zweite Anlegekanten.

In einer vorteilhaften Weiterbildung der Vorrichtung sind die Anlegekanten Teile einer Haltevorrichtung, mit welcher die Leiter und/oder der Strang ausserhalb des Verdichtungsraums, insbesondere während eines Schweissvorgangs festlegbar sind und, insbesondere nach einem Schweissvorgang wieder freigebbar sind.

Die Schutzhaube kann jeweils elastische Klemmlippen aufweisen, deren freie Enden die Anlegekanten bilden. Mittels der Klemmlippen können die Leiter und der Strang bei geschlossener Schutzhaube an einer Anschlagfläche festgeklemmt werden. Auf diese Weise ist eine Lage der Leiter und des Stranges ausserhalb des Verdichtungsraums weitgehend festgelegt.

Vorteilhafterweise umfasst die Vorrichtung ein auswechselbares Schieberelement mit Rückhalteelement und die Vorrichtung umfasst insbesondere mindestens ein weiteres Schieberelement ohne Rückhalteelement. Das Schieberelement kann dann demontiert werden und durch ein anderes Schieberelement ersetzt werden. Auf diese Weise ist die Vorrichtung umrüstbar und kann für unterschiedliche elektrische Kabel oder Leiter verwendet werden, insbesondere für Kabel mit und ohne zurückzuhaltenden Strang oder für Kabel mit unterschiedlich dicken Strängen oder unterschiedlich vielen Leitern.

Die Vorrichtung kann auch ein Schieberelement mit auswechselbarem Einsatz aufweisen. Zum Beispiel kann ein Einsatz mit einer Nut demontiert werden und durch einen anderen Einsatz ohne Nut oder mit einer Nut, die eine andere Querschnittsfläche und/oder einen anderen Durchmesser aufweist, ersetzt werden.

Die Aufgabe wird weiter gelöst durch eine Anlage zum Ultraschallverbinden mit mindestens zwei Vorrichtungen zum Ultraschallverbinden von elektrischen Leitern, wovon mindestens eine Vorrichtung zum Ultraschallverbinden eine Vorrichtung ist, wie sie oben beschrieben ist. Die Anlage ist insbesondere so ausgebildet, dass zwei oder mehr Sonotroden und korrespondierende Ambosse parallel zueinander angeordnete Verdichtungsräume begrenzen.

Es können dann gleichzeitig zwei oder mehr ausisolierte Bereiche von denselben Leitern in die jeweilige Verdichtungsräume eingebracht werden und mit Leiterenden, Kontaktelementen oder zwischenausisolierten Bereichen weiterer Leiter verbunden werden, während ein Strang aus mindestens einem Verdichtungsraum ferngehalten wird.

Die Aufgabe wird ausserdem gelöst durch ein Verfahren zum Ultraschallverbinden von elektrischen Leitern in einem Verdichtungsraum einer Vorrichtung zum Ultraschallverbinden, insbesondere wie oben beschrieben.

Der Verdichtungsraum ist in einer Schweissposition zumindest von Abschnitten von Begrenzungsflächen begrenzt. Die Begrenzungsflächen umfassen eine Arbeitsfläche einer ultraschallübertragenden Sonotrode und eine Ambossfläche, welche an einem Amboss angeordnet ist.

Ein Rückhalteelement ist an der Vorrichtung vorgesehen zum Fernhalten mindestens eines Stranges aus dem Verdichtungsraum, der mit zumindest einem Teil der zu verbindenden Leiter verbunden ist. Insbesondere dient das Rückhaltelement zum Fernhalten eines Leiterstranges.

Zunächst erfolgt das Erstellen einer Einlegeposition des Verdichtungsraums, in welcher der Verdichtungsraum zum Einlegen der Leiter an einer Einlegeöffnung zumindest teilweise offen ist.

Die zu verbindenden Leiter werden dann in den Verdichtungsraum eingelegt. Vorher, gleichzeitig oder nachher erfolgt ein Positionieren des mindestens einen Stranges an dem Rückhalteelement. Insbesondere wird der Strang auf einer von einer Schieberfläche wegweisenden Seite eines an einem Schiebelement vorstehenden Elements positioniert. Der Strang kann an einer von der Schieberfläche wegweisenden Rückhaltefläche anliegen.

Es wird dann eine Schweissposition des Verdichtungsraums erstellt und der Strang wird durch das Rückhalteelement von dem Verdichtungsraum in der Schweissposition ferngehalten.

Es kann dann der Schweissvorgang durch Beaufschlagen mit Ultraschallwellen erfolgen.

Das Rückhalteelement hindert den Strang während des Einlegevorgangs und während des Schweissens daran, in den Verdichtungsraum zu gelangen.

Zum Beispiel kann ein vorstehendes Element an dem Schieberelement eine Barriere bilden zwischen einem Auflagebereich und dem Verdichtungsraum.

In einer vorteilhaften Ausbildung des Verfahrens wird das Rückhalteelement aus der Einlegeposition in eine Schweissposition bewegt und dabei bleibt die relative Anordnung von den Leitern und dem mindestens einen Strang erhalten. Zum Beispiel kann ein Schieberelement mit Schieberfläche und einem vorstehenden Element in Richtung einer gegenüberliegenden Begrenzungsfläche geschoben werden. Die zu verbindenden Leiter sind zwischen der Schieberfläche und der gegenüberliegenden Begrenzungsfläche angeordnet und der wegzuhaltende Strang liegt auf der von der Schieberfläche wegweisenden Seite des vorstehenden Elements, bevorzugt an einer von der Schieberfläche wegweisenden Rückhaltefläche.

Wird der Schieber bewegt, werden die Leiter im Verdichtungsraum zusammengeschoben und gleichzeitig hat der Strang die Möglichkeit, der Bewegung zu folgen, so dass keine unnötige Spannung auf dem Strang und/oder einem Kabel, zum dem die Leiter und der Strang gehören, liegt.

In einer bevorzugten Weiterbildung des Verfahrens wird eine Schutzhaube über den Verdichtungsraum bewegt, so dass dieser in der Schweissposition abgedeckt ist. Die Leiter verlaufen von einem Aussenbereich in den Verdichtungsraum, und der Strang verläuft von einem Aussenbereich der Schutzhaube in die Schutzhaube hinein, und bevorzugt auf der gegenüberliegenden Seite wieder hinaus.

Die Leiter können dabei durch mindestens einen ersten Durchlass in der Schutzhaube an den Verdichtungsraum herangeführt werden, und die Leiter können mit mindestens einer Anlegekante ausgerichtet werden.

Der mindestens eine Strang kann durch mindestens eine weitere Anlegekante ausgerichtet werden, die bevorzugt in mindestens einem weiteren Durchlass der Schutzhaube angeordnet ist.

In einer Variante des Verfahrens werden Leiter von zwei gegenüberliegenden Seiten in den Verdichtungsraum geführt und in Längsrichtung miteinander verbunden. Alternativ oder zusätzlich können Leiter von derselben Seite in den Verdichtungsraum geführt und verbunden werden.

Der wegzuhaltende Strang kann mindestens einen länglichen Leiter umfassen, der während des Verbindens der zu verbindenden Leiter an dem Verdichtungsraum vorbeigeführt ist.

Der wegzuhaltende Strang kann zu zwei oder mehr von gegenüberliegenden Seiten an den Verdichtungsraum geführten Kabeln gehören, die ausserdem Leiter umfassen, welche verbunden werden sollen.

Der wegzuhaltende Leiterstrang kann zum Beispiel durch jeweils gemeinsame Abschirmungen, Isolierungen und/oder Kabelumhüllungen mit den zu verbindenden Leitern verbunden sein.

In einer bevorzugten Ausführung des Verfahrens wird eine erste Gruppe von Leitern mindestens zweier Kabel, die von gegenüberliegenden Seiten an den Verdichtungsraum herangeführt sind, in den Verdichtungsraum eingelegt.

Insbesondere kann mindestens eine zweite Gruppe von Leitern so positioniert werden, dass sie durch das Rückhalteelement von dem Verdichtungsraum ferngehalten werden.

Eine erste Schweissverbindung der ersten Gruppe von Leitern wird hergestellt und bildet einen Leiterstrang.

Anschliessend werden die mit der ersten Schweissverbindung verbundenen Leiter so positioniert, dass sie durch das Rückhalteelement von dem Verdichtungsraum ferngehalten werden, und die zweite Gruppe von Leitern wird in den Verdichtungsraum abgelegt. Eine zweite Schweissverbindung der zweiten Gruppe von Leitern wird hergestellt, die parallel zu der ersten Schweissverbindung angeordnet ist.

In einer vorteilhaften Ausbildung des Verfahrens kann zunächst zwischen Leitern zweier Kabel, die von einer ersten Seite an den Verdichtungsraum herangeführt werden und Leitern eines dritten Kabels, das von der anderen Seite an den Verdichtungsraum herangeführt ist, ein erster Y-Knoten hergestellt werden. Der erste Y-Knoten kann dann so positioniert werden, dass er durch das Rückhalteelement von dem Verdichtungsraum ferngehalten wird und weitere Leiter der drei Kabel können in den Verdichtungsraum eingelegt werden, so dass ein weiterer Y-Knoten hergestellt werden kann. Die hergestellten Y-Knoten sind parallel zueinander angeordnet.

In einer weiteren vorteilhaften Ausbildung des Verfahrens kann zunächst zwischen Leitern zweier Kabel, die von einer ersten Seite an den Verdichtungsraum herangeführt werden und Leitern zweier weiterer Kabel, die von der anderen Seite an den Verdichtungsraum herangeführt werden, ein erster X-Knoten hergestellt werden. Der erste X-Knoten kann dann so positioniert werden, dass er durch das Rückhalteelement von dem Verdichtungsraum ferngehalten wird und weitere Leiter der vier Kabel können in den Verdichtungsraum eingelegt werden, so dass ein weiterer X-Knoten hergestellt werden kann. Die hergestellten X-Knoten sind parallel zueinander angeordnet.

In einer weiteren vorteilhaften Ausbildung des Verfahrens können wie oben beschrieben parallel angeordnete X-Knoten oder Y-Knoten von Kabeln mit verdrillten Leitern hergestellt werden. Das Rückhalteelement sorgt dafür, dass der bereits erstellte Knoten ohne Risiko nah an den Verdichtungsraum gebracht werden kann. Die Verdrillung der Leiter muss um die Verbindungsstelle herum also nur auf einer kurzen Strecke aufgehoben werden.

Derartig verbundene Kabel können für CAN Busse in Fahrzeugen verwendet werden, wo die Anforderung besteht, dass die Verdrillung auf einer Länge von zum Beispiel maximal 15-30mm aufgehoben sein darf.

Während des Schweissvorgangs kann eine Schutzhaube in eine geschlossene Position bewegt werden, in welcher sie den Verdichtungsraum abdeckt.

Grundsätzlich ist es möglich, das Verfahren auf alle Sorten von mehradrigen Kabeln anzuwenden, insbesondere auf solche, bei denen eine kurze Abisolierlänge des Kabels gewünscht ist.

Die Aufgabe wird ausserdem gelöst durch eine Verwendung eines Schieberelements, das mindestens ein vorstehendes Element aufweist, zum Fernhalten eines Strangs von einem Verdichtungsraum, in welchem parallel zum Strang verlaufende Leiter verbunden werden soll. Die Verwendung erfolgt in einer Vorrichtung zum Ultraschallverbinden von elektrischen Leitern, insbesondere wie oben beschrieben.

Der ferngehaltene Strang kann eine bereits zuvor hergestellte Verbindungsstelle umfassen.

Insbesondere können daher Gruppen von Leitern verbunden werden, die im verbunden Zustand parallel zueinander angeordnete Verbindungsstellen aufweisen.

Die Leiter können vor dem Verbinden ein abisoliertes Ende aufweisen.

Ein zu verbindender Leiter kann auch eine Zwischenausisolierung aufweisen, die im Verdichtungsraum platziert wird, so dass derselbe Leiter in den Verdichtungsraum hinein und aus dem Verdichtungsraum heraus verläuft.

Eine weitere Ausführung bezieht sich auf ein Verfahren zum Umrüsten einer Vorrichtung zum Ultraschallverbinden von Schweissgut, wie zum Beispiel elektrischen Leitern, mit einem Verdichtungsraum zur Aufnahme des Schweissgutes. Der Verdichtungsraum ist in einer Schweissposition von Abschnitten aneinander angrenzender Begrenzungsflächen begrenzt. Die Begrenzungsflächen umfassen eine Arbeitsfläche einer ultraschallübertragenden Sonotrode, eine Ambossfläche, welche an einem Amboss angeordnet ist und eine Schieberfläche, welche an einem Schieberelement angeordnet ist. Das Schieberelement wird ersetzt durch ein Schieberelement, welches mindestens Rückhalteelement, bevorzugt ein vorstehendes Element, aufweist zum Fernhalten mindestens eines Strangs aus dem Verdichtungsraum.

Nicht gemäß der Erfindung ist Leiterstruktur mit mindestens einem ersten und einem zweiten Leiterstrang, die jeweils Leiter aufweisen offenbart.

Die Leiterstränge umfassen Verbindungsstellen, an denen Leiter in Längsrichtung miteinander durch Ultraschallverbinden verbunden sind, insbesondere in einem Verfahren wie oben beschrieben, so dass die Verbindungsstellen parallel zueinander angeordnet sind. Bei den Verbindungsstellen kann es sich um X-Knoten oder Y-Knoten handeln.

Zu verschiedenen Leitersträngen gehörige Leiter sind ausserhalb der Verbindungsstelle über eine Länge zusammengefasst, insbesondere durch eine Verdrillung, eine Abschirmung oder eine Isolationshülle, und die Leiter sind um die parallelen Verbindungsstellen auf einer freigestellten Länge nicht zusammengefasst. Insbesondere ist die freigestellte Länge
- für Leiter mit einem Durchmesser von kleiner gleich 1mm oder einem Nennquerschnitt kleiner gleich als 0.5mm² kleiner als der 40fache Durchmesser des Leiters,
- für Leiter mit einem Durchmesser von grösser 1mm und kleiner gleich 5mm oder einem Nennquerschnitt grösser 0.5 mm² und kleiner gleich 10mm² kleiner als der 20fache Durchmesser des Leiters und
- für Leiter mit einem Durchmesser von grösser 5mm oder einem Nennquerschnitt grösser 10mm² kleiner als der 10fache Durchmesser des Leiters.

Der Nennquerschnitt ist als elektrisch wirksamer Querschnitt definiert. Die Ermittlung des Nennquerschnitts erfolgt durch die Messung des elektrischen Widerstands bei einer Umgebungstemperatur von 20°C. Der Nennquerschnitt wird als Grössenangabe häufig bei feindrahtigen Leitern, Starkstromkabel und -leitungen verwendet. Der Nennquerschnitt ist in seinen Abmessungen kleiner als der geometrische Querschnitt.

Die Leiter sind insbesondere ausserhalb der Verbindungsstelle verdrillt und um die parallelen Verbindungsstellen auf einer Länge von maximal 30mm, bevorzugt maximal 15mm, entdrillt.

Die verdrillten Leiter weisen bevorzugt einen Nennquerschnitt von 0.8mm² bis 4mm² auf.

Alternativ oder zusätzlich verlaufen die Leiter ausserhalb der Verbindungsstelle als Kabel in Kabelabschirmungen und/oder Isolationshüllen und auf einer Länge von maximal 70mm, bevorzugt 60mm, um die Verbindungsstellen liegt keine Kabelabschirmung und/oder Isolationshülle vor.

Die Leiter der abgeschirmten Kabel weisen bevorzugt einen Querschnitt von 4mm²-8mm² auf.

Die Erfindung wird im Folgenden anhand von Abbildungen exemplarischer Ausführungsbeispiele näher erläutert.

Es zeigen schematisch
- Figur 1a: einen Verdichtungsraum einer erfindungsgemässen Vorrichtung in einer Entnahmeposition;
- Figur 1b: den Verdichtungsraum der erfindungsgemässen Vorrichtung in einer Einlegeposition;
- Figur 1c: den Verdichtungsraum der erfindungsgemässen Vorrichtung in einer ersten Schweissposition;
- Figur 1d: den Verdichtungsraum der erfindungsgemässen Vorrichtung in einer zweiten Schweissposition;
- Figur 2: eine erfindungsgemässe Vorrichtung in Draufsicht;
- Figur 3a: ein Schieberelement in Schnittdarstellung;
- Figur 3b: das Schieberelement perspektivischer Darstellung;
- Figur 4: ein Schieberelement in Schnittdarstellung;
- Figur 5: eine Schutzhaube in perspektivischer Darstellung;
- Figur 6a: einen doppelten Y-Knoten in einer ersten Seitenansicht;
- Figur 6b: den doppelten Y-Knoten in einer zweiten Seitenansicht;
- Figur 6c: den doppelten Y-Knoten in einer Schnittansicht entlang der Schnittlinie A-A aus Figur 6b;
- Figur 7: einen doppelten X-Knoten in einer Seitenansicht;
- Figuren 8a-8c: die Schritte eines erfindungsgemässen Verfahrens.

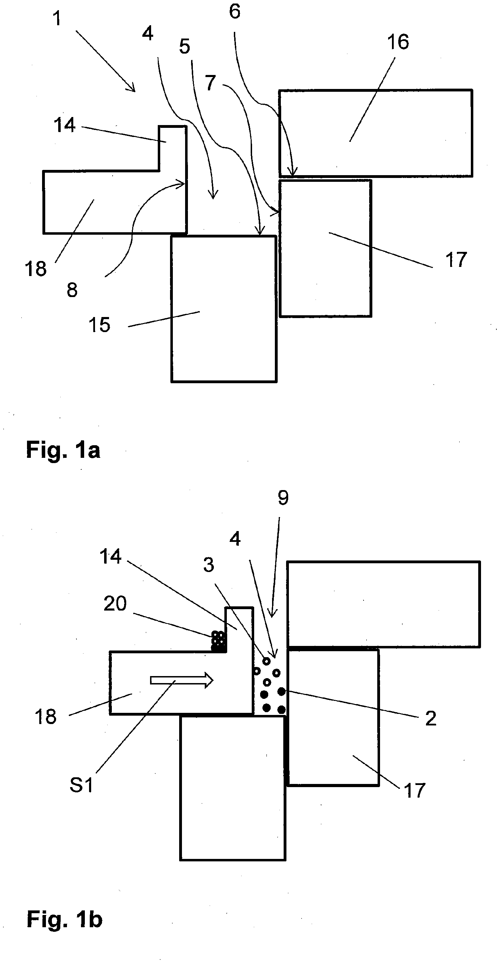

Figuren 1a bis 1d zeigen schematisch verschiedene Positionen eines Verdichtungsraums 4 einer erfindungsgemässen Vorrichtung 1 mit einem Verdichtungsraum 4 zur Aufnahme der Leiter 2, 3 (siehe Figur 1b) welche bei einem Verbindungsprozess eingenommen werden können.

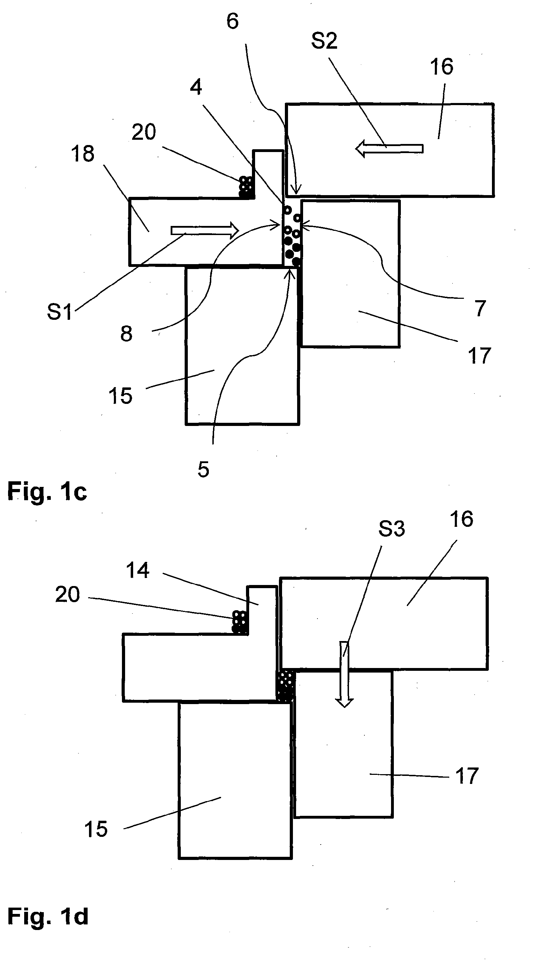

Herbei zeigen Figur 1a eine Entnahmeposition, in welcher der Verdichtungsraum 4 offen ist, Figur 1b eine Einlegeposition, in welcher eine Einlegeöffnung 9 besteht, und Figuren 1c und 1d jeweils Schweisspositionen.

Der Verdichtungsraum 4 wird von einer ultraschallübertragenden Sonotrode 15, einem Amboss 16, einem seitlichen Begrenzungselement 17 und einem Schieberelement 18 definiert.

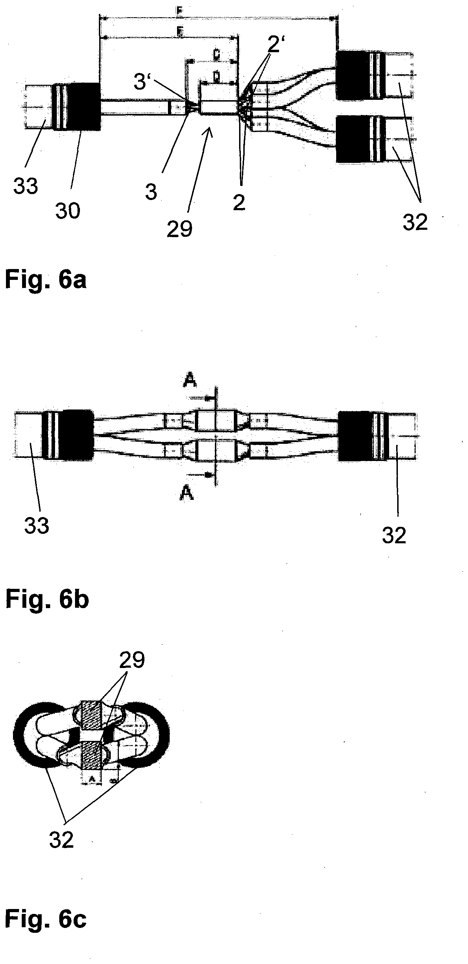

Der Verdichtungsraum 4 weist eine rechtwinklige Innenkante auf, welche als kontrollierte Anlagefläche beim Einlegen der Leiter 2, 3 dient und formgebend für die zu erstellende Verbindungsstelle ist, also die Kompaktierhöhe A und die Kompaktierbreite B (siehe Figur 6c) vorgibt.

In der Schweissposition ist der Verdichtungsraum 4 von Abschnitten aneinander angrenzender Begrenzungsflächen 5, 6, 7, 8 begrenzt. Die Begrenzungsflächen umfassen eine Arbeitsfläche 5 der ultraschallübertragenden Sonotrode 15 und eine der Arbeitsfläche 5 gegenüberliegend angeordnete Ambossfläche 6, welche an dem Amboss 16 angeordnet ist.

In den Verdichtungsraum 4 werden von gegenüberliegenden Seiten des Verdichtungsraums 4 Leiter 2, 3 eingeführt.

Das Schiebeelement 18 umfasst ein Rückhalteelement 14, das einen Strang 20 von dem Verdichtungsraum 4 fernhält. Das Rückhalteelement 14 ist hier als vorstehendes Element ausgebildet.

Der Strang 20 ist mit den Leitern 2, 3 verbunden, was in den Schnittdarstellungen 1b bis 1d nicht explizit dargestellt ist.

Während des Ultraschallverbindungsprozesses werden die Leiter 2, 3 kompaktiert, indem das Schieberelement 28, wie in Figuren 1b und 1c angedeutet ist, in Richtung S1 auf das seitliche Begrenzungselement 17 zu verschoben wird.

In der Schweissposition ist der Verdichtungsraum 4 im Wesentlichen von der Sonotrode 15, dem Amboss 16, dem Begrenzungselement 17 und dem Schieberelement 18 begrenzt. Dazu wird, wie in Figur 1c angedeutet ist, der Amboss 16 zunächst in Richtung S2 auf das Schieberelement 18 zu verschoben und anschliessend, wie in Figur 1d angedeutet, zusammen mit dem seitlichen Begrenzungselement 17 in Richtung S3 auf die Sonotrode 15 zu verschoben.

Während des gesamten Prozesses bleibt der Strang 20 auf der von der Schieberfläche 8 abgewandten Seite des Rückhalteelements 14 liegen und wird so aus dem Verdichtungsraum 4 ferngehalten.

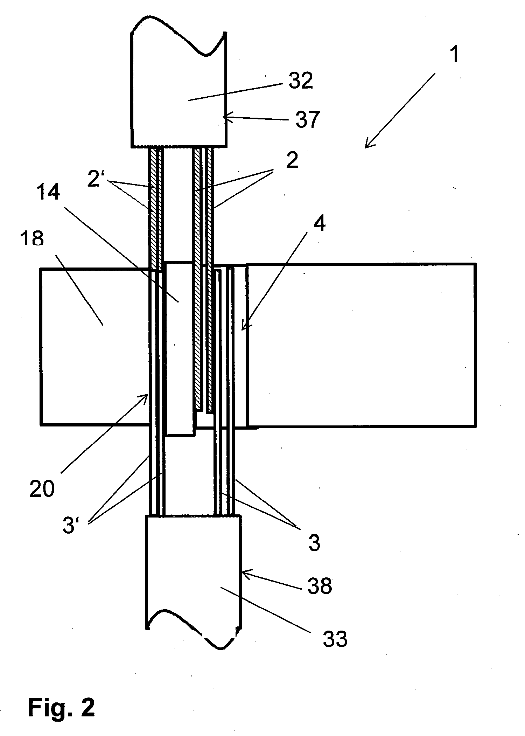

Figur 2 zeigt eine erfindungsgemässe Vorrichtung 1 in Draufsicht. Eine ersten Gruppe von Leitern 2 eines ersten Kabels 32 und eine erste Gruppe von Leitern 3 eines zweiten Kabelns 33 sind von gegenüberliegenden Seiten an den Verdichtungsraum 4 herangeführt. Ein Strang 20 verläuft auf der von dem Verdichtungsraum 4 wegweisenden Seite des Rückhaltelements 14, das an einem Schieberelement 18 angeordnet ist. Der Strang 20 wird durch das Rückhalteelement 14 daran gehindert, in den Verdichtungsraum 4 zu gelangen. Die Leiter 2, 3 können ungestört kompaktiert und verschweisst werden.

Der Strang 20 umfasst insbesondere Leiter 2', 3', die zu den beiden gegenüberliegenden Kabeln 32, 33 gehören. Die Leiter 2', 3' des Strangs 20 sind über Kabelumhüllungen 37, 38 mit den in den Verdichtungsraum 4 führenden Leitern 2, 3 verbunden. Der Strang 20 kann einen vorher hergestellten Schweissknoten aufweisen.

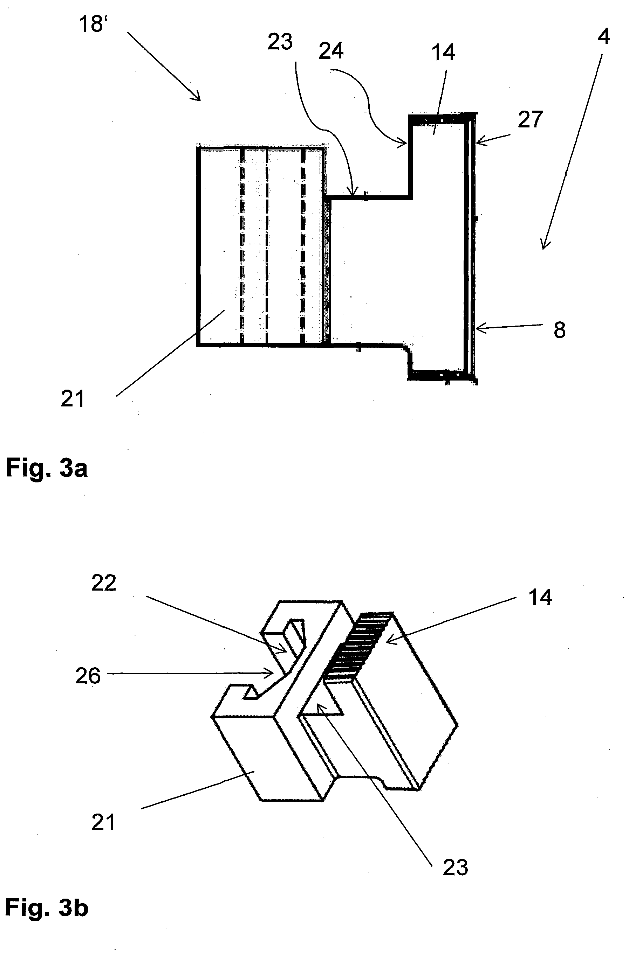

Figur 3a und 3b zeigen ein Beispiel für ein Schieberelement 18' in Schnittdarstellung und in perspektivischer Darstellung.

An dem Schieberelement 18' ist ein Rückhalteelement 14, das als vorstehendes Element ausgebildet ist, angeordnet. Das Rückhalteelement 14 weist eine zu dem Verdichtungsraum 4 weisende Fläche 27 auf, die parallel zur Schieberfläche 8 angeordnet ist, in diesem Fall einen Teil der Schieberfläche 8 bildet. Das Rückhalteelement 14 weist überdies eine von dem Verdichtungsraum 4 wegweisende Fläche 24 auf, welche einen in der Figur nicht explizit gezeigten wegzuhaltenden Strang von dem Verdichtungsraum 4 wegdrücken kann.

Das Schieberelement 18' besitzt einen von der Schieberfläche 8 wegweisenden Montagebereich 21.

In dem Montagebereich 21 ist benachbart zum Rückhalteelement 14 eine Auflagefläche 23 für den mindestens einen nicht explizit dargestellten Strang 20 angeordnet, die als Absenkung ausgebildet ist.

Im Montagebereich 21 ist ausserdem eine Montageöffnung 26 mit einer Montagefläche 22 vorgesehen, mit welcher eine Verbindung zu einem nicht dargestellten maschinenseitigen Gegenstück hergestellt werden kann. Die Verbindung ist leicht mit einem Werkzeug lösbar, so dass das Schieberelement 18' auswechselbar ist.

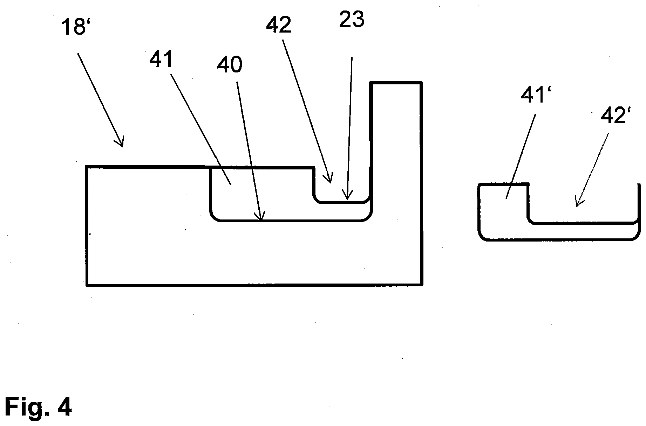

Figur 4 zeigt ein weiteres Beispiel für ein Schieberelement 18' in Schnittdarstellung.

In dem Schieberelement 18' ist eine Ausnehmung 40 vorgesehen, in die ein Einsatz 41 einlegbar ist. In dem Einsatz 41 ist eine Nut 42 angebracht, die eine Auflagefläche 23 für einen Strang bietet. In die Ausnehmung kann zum Beispiel für andere Anwendungszwecke ein anderer Einsatz 41' eingelegt werden, der eine Nut 42' mit grösserer Querschnittsfläche aufweist.

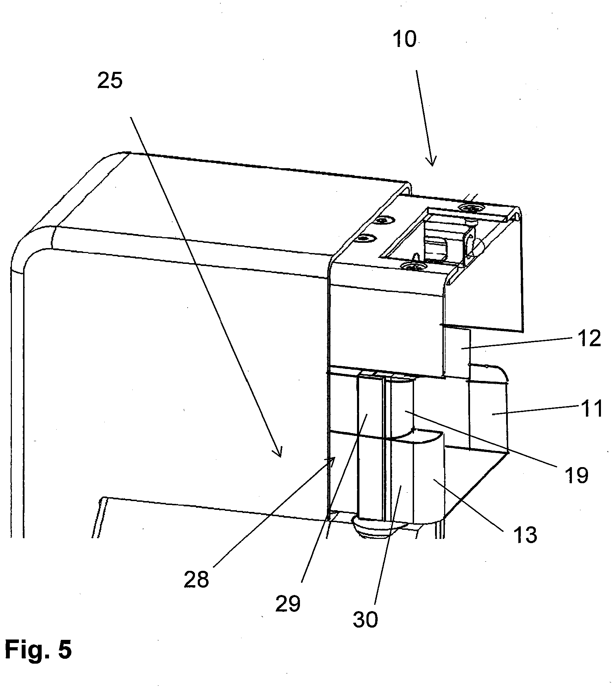

Figur 5 zeigt eine Schutzhaube 10 in perspektivischer Darstellung. Die Schutzhaube 10 ist über den in dieser Figur nicht gezeigten Verdichtungsraum 4 bewegbar, so dass dieser in der Schweissposition abgedeckt ist. Die Schutzhaube 10 ist derart ausgebildet, dass die Leiter 2, 3 und der Strang 20, welche ebenfalls in dieser Abbildung nicht dargestellt sind, von einem Aussenbereich 25 der Schutzhaube 10 in den Verdichtungsraum 4 verlaufen können, wenn die Schutzhaube 10 den Verdichtungsraum 4 in der Schweissposition abdeckt.

Die Schutzhaube 10 umfasst einen ersten Durchlass 11 zum Durchführen der Leiter 2, 3 und eine erste Anlegekante 13 zum Ausrichten der Leiter 2, 3, sowie eine zweite Anlegekante 19 zum Ausrichten des mindestens einen Stranges 20. Ein zweiter Durchlass 12 ist vorgesehen, durch welchen der Strang 20 verlaufen kann.

Der erste und der zweite Durchlass 11, 12 sowie die erste und zweite Anlegekante 13, 19 sind jeweils beidseitig angebracht, so dass Leiter und Strang beidseitig in die Schutzhaube, bzw. aus der Schutzhaube verlaufen können.

Die Anlegekanten 13, 19 sind Teile einer Haltevorrichtung 28, hier elastische Klemmlippen 29, 30, mit welcher die Leiter 2, 3 und der Strang 20 ausserhalb des Verdichtungsraums 4, insbesondere während eines Schweissvorgangs festlegbar sind und, insbesondere nach einem Schweissvorgang, wieder freigebbar sind. Figur 6a und 6b zeigen einen doppelte Y-Knoten 29 in zwei Seitenansichten und Figur 6c zeigt den doppelten Y-Knoten 29 in einer Schnittansicht entlang der Schnittlinie A-A aus Figur 6b.

Bei einem Y-Knoten werden zwei Leiter 2 mit einem Leiter 3 in Längsrichtung verbunden.

Die erfindungsgemässe Vorrichtung und das erfindungsgemässe Verfahren finden vor allem dann Anwendung, wenn wie im Beispiel gezeigt, zwei Kabel 32 je zwei Leiter 2, 2' heranführen, die jeweils mit einem von zwei Leitern 3, 3' zu verbinden sind, welche von einem Kabeln 33 von der gegenüberliegenden herangeführt werden.

Es werden in zwei Schritten zwei parallel zueinander angeordnete Y-Knoten 29 hergestellt. In einem ersten Schritt wird ein erster Y-Knoten 29 erstellt. In einem zweiten Schritt wird dieser von dem Rückhaltelement in einer Parkposition gehalten und die übrigen Leiter werden zu einem zweiten Y-Knoten verbunden.

Die Enden der Leiter 2, 2', 3, 3' können dabei kurz ausgebildet sein, so dass die aus dem Kabelmantel 30 herausgeführte Länge E der Leiter 2, 2', 3, 3' 40mm und die Gesamtlänge F der Verbindung 70mm betragen kann. Eine Länge C von 15mm der Leiter 2, 2', 3, 3' ist abisoliert, um eine Kompaktierlänge D von 11-13mm zu erreichen. Die Kompaktierbreite B kann dabei etwa 5mm betragen und die Kompaktierhöhe A der Y-Verbindung 29 3.6 - 4.3mm.

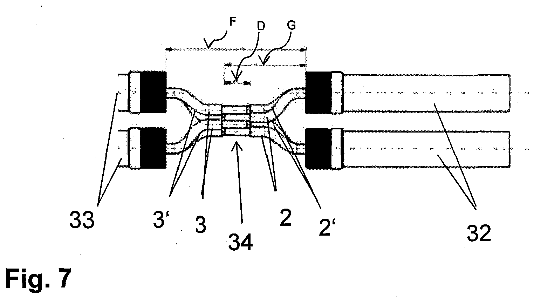

Figur 7 zeigt einen doppelten X-Knoten 34 in einer Seitenansicht.

Bei einem X-Knoten werden jeweils zwei Leiter 2 die von einer ersten Seite an die Verbindungsstelle 34 herangeführt werden, mit zwei Leitern 3, die von der gegenüberliegenden Seite an die Verbindungsstelle 34 herangeführt werden, in Längsrichtung verbunden.

Die erfindungsgemässe Vorrichtung und das erfindungsgemässe Verfahren finden vor allem dann Anwendung, wenn wie im Beispiel gezeigt, zwei Kabel 32 je zwei Leiter 2, 2' heranführen, die mit je zwei Leitern 3, 3' verbunden werden, welche von zwei Kabeln 33 von der gegenüberliegende Seite herangeführt werden.

Es werden dann in zwei Schritten zwei parallel zu einander angeordnete X-Knoten 34 hergestellt. In einem ersten Schritt wird ein erster X-Knoten 34 erstellt. In einem zweiten Schritt wird dieser von dem Rückhaltelement in einer Parkposition gehalten und die übrigen Leiter werden zu einem zweiten X-Knoten 34 verbunden.

Die Abisolierlänge G kann 40mm betragen und die Gesamtlänge F der X-Verbindung 70mm, bei einer Kompaktierlänge D von 15mm.

Nach Erstellen der X-Verbindung kann die X-Verbindungstelle 34 mit einer Isolierung und mit Gehäuseteilen umgeben werden.

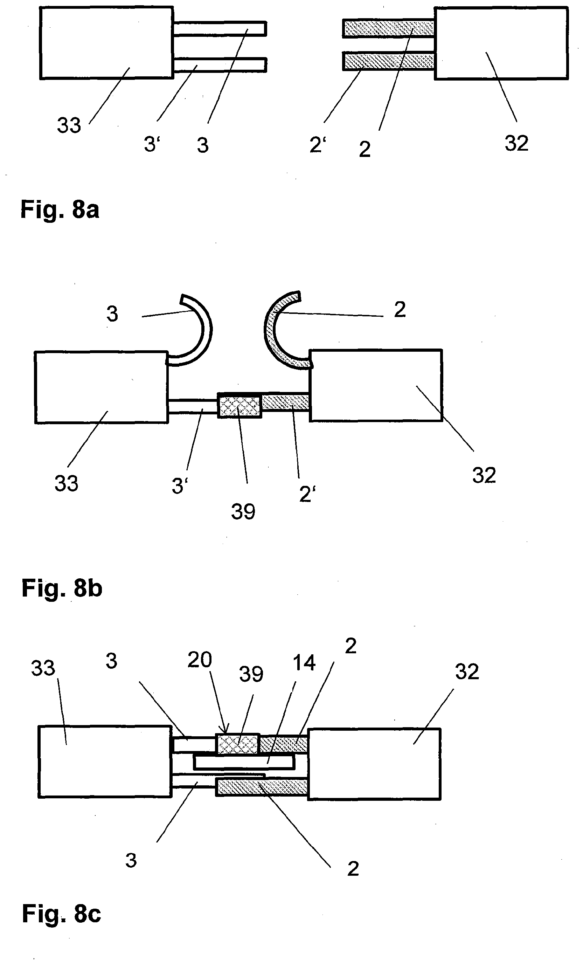

Figuren 8a bis 8c zeigen schematisch das erfindungsgemässe Verfahren.

Gemäss Figur 8a sollen die Leiter 2, 2', 3, 3' zweier Kabeln 32, 33 jeweils in Längsrichtung miteinander verbunden werden sollen.

Gemäss Figur 8b werden ein erster Leiter 2' des ersten Kabels 32 und ein erster Leiter 3' des zweiten Kabels 33 von gegenüberliegenden Seiten an einen nicht explizit dargestellten Verdichtungsraum 4 herangeführt. Dort wird zwischen den ersten Leitern 2', 3' gegenüberliegender Kabel 32, 33 eine Schweissverbindung hergestellt und ein erster Schweissknoten 39 gebildet. Die noch unverbundenen Enden der übrigen Leiter 2, 3 können leicht von dem Verdichtungsraum ferngehalten werden.

In einem weiteren Schritt, der in Figur 8c angedeutet ist, sollen nun die beiden übrigen Leiter 2, 3 miteinander verbunden werden. Die bereits verbundenen Leiter 2', 3' bilden mit dem Schweissknoten 39 einen Strang 20.

Dieser Strang 20 wird so positioniert, dass er durch das Rückhalteelement 14 von dem Verdichtungsraum 4 ferngehalten wird, in den die zweiten Leiter 2, 3 der gegenüberliegenden Kabel abgelegt werden.

Es kann nun problemlos eine zweite Schweissverbindung zwischen den zweiten Leitern 2, 3 der gegenüberliegenden Kabel 32, 33 hergestellt werden.

## Patentansprüche

1. Vorrichtung (1) zum Ultraschallverbinden von elektrischen Leitern (2, 2', 3, 3`),zur Bildung einer Leiterstruktur mit mindestens einem ersten und einem zweiten Leiterstrang,
mit einem Verdichtungsraum (4) zur Aufnahme der Leiter (2, 3), wobei der Verdichtungsraum (4) in einer Schweissposition von Abschnitten aneinander angrenzender Begrenzungsflächen (5, 6, 7, 8) begrenzt ist, welche Begrenzungsflächen eine Arbeitsfläche (5) einer ultraschallübertragenden Sonotrode (15) und eine der Arbeitsfläche (5) gegenüberliegend angeordnete Ambossfläche (6) umfassen,
**dadurch gekennzeichnet, dass**
mindestens ein Rückhalteelement (14) vorgesehen ist zum Fernhalten mindestens eines Leiterstranges (20), der mit zumindest einem Teil der Leiter (2, 2', 3, 3') verbunden ist vom Verdichtungsraum (4), wobei die Vorrichtung (1) derart ausgebildet ist, dass das Rückhalteelement (14) den Leiterstrang (20) zumindest während des Ultraschallverbindens vom Verdichtungsraum (4) fernhält, wobei die Begrenzungsflächen eine Schieberfläche (8), welche an einem Schieberelement (18, 18') angeordnet ist, umfassen und das Rückhalteelement (14) an dem Schieberelement (18, 18') angeordnet ist.

2. Vorrichtung gemäss Anspruch 1, wobei das Rückhalteelement (14) als vorstehendes Element an dem Schieberelement (18, 18') ausgebildet ist.

3. Vorrichtung gemäss Anspruch 1 oder 2, wobei das Schieberelement (18, 18') einen von der Schieberfläche (8) wegweisenden Montagebereich (21) aufweist, und das Schieberelement (18, 18') bevorzugt im Montagebereich (21) eine Auflagefläche (23) für den mindestens einen Leiterstrang (20) umfasst, die insbesondere als Absenkung im Montagebereich (21) ausgebildet ist.

4. Vorrichtung gemäss einem der vorhergehenden Ansprüche, wobei das Schieberelement (18, 18') eine Ausnehmung (40) aufweist und die Vorrichtung einen Einsatz (41, 41') zum Einlegen in die Ausnehmung (40) umfasst, auf dem eine Auflagefläche (23) für den mindestens einen Leiterstrang (20) ausgebildet ist.

5. Vorrichtung gemäss einem der vorhergehenden Ansprüche, wobei die Vorrichtung eine Schutzhaube (10) umfasst, die über den Verdichtungsraum (4) bewegbar ist, so dass dieser in der Schweissposition abgedeckt ist, wobei die Schutzhaube (10) derart ausgebildet ist, dass die Leiter (2, 2', 3, 3') von einem Aussenbereich (25) der Vorrichtung (1) in den Verdichtungsraum (4) verlaufen, wenn die Schutzhaube (10) den Verdichtungsraum (4) in der Schweissposition abdeckt und die Schutzhaube (10) derart ausgebildet ist, dass der Leiterstrang (20) von einem Aussenbereich (25) der Vorrichtung (1) in die Vorrichtung (1) verläuft, wenn die Schutzhaube (10) den Verdichtungsraum (4) in der Schweissposition abdeckt.

6. Vorrichtung gemäss Anspruch 5, wobei die Schutzhaube (10) mindestens einen ersten Durchlass (11) zum Durchführen der Leiter (2, 2', 3, 3') und insbesondere mindestens eine ersten Anlegekante (13) zum Ausrichten der Leiter (2, 2', 3, 3') umfasst, sowie mindestens eine weitere Anlegekante (19) zum Ausrichten des mindestens einen Leiterstrangs (20) aufweist, und wobei bevorzugt ein weiterer Durchlass (12) vorgesehen ist, durch welchen der Leiterstrang (20) führbar ist.

7. Vorrichtung gemäss Anspruch 6, wobei die Anlegekante (19) zum Ausrichten des mindestens einen Leiterstrangs (20) und mindestens eine Anlegekante (13) zum Ausrichten der Leiter (2, 2', 3, 3') Teile einer Haltevorrichtung sind, mit welcher die Leiter (2, 3) und der Leiterstrang (20) ausserhalb des Verdichtungsraums (4), insbesondere während eines Schweissvorgangs festlegbar sind und, insbesondere nach einem Schweissvorgang wieder freigebbar sind.

8. Vorrichtung gemäss einem der vorhergehenden Ansprüche, wobei die Vorrichtung (1) ein auswechselbares Schieberelement (18, 18') mit Rückhalteelement (14) umfasst und die Vorrichtung (1) insbesondere mindestens ein weiteres Schieberelement ohne Rückhalteelement (14) umfasst.

9. Verfahren zum Ultraschallverbinden von elektrischen Leitern (2, 3), zur Bildung einer Leiterstruktur mit mindestens einem ersten und einem zweiten Leiterstrang, in einem Verdichtungsraum (4) einer Vorrichtung (1) zum Ultraschallverbinden gemäss einem der Ansprüche 1 bis 8,
wobei der Verdichtungsraum (4) in einer Schweissposition zumindest von Abschnitten von Begrenzungsflächen (5, 6, 7, 8) begrenzt ist, welche Begrenzungsflächen (5, 6, 7, 8) eine Arbeitsfläche (5) einer ultraschallübertragenden Sonotrode (15) und eine Ambossfläche (6) umfassen, wobei ein Rückhalteelement (14) vorgesehen ist zum Fernhalten mindestens eines Leiterstrangs (20), der mit zumindest einem Teil der Leiter (2, 3) verbunden ist, aus dem Verdichtungsraum (4),
wobei das Verfahren die Schritte umfasst:
a.) Erstellen einer Einlegeposition des Verdichtungsraums (4), in welcher der Verdichtungsraum (4) zum Einlegen der Leiter (2, 3) an einer Einlegeöffnung (9) zumindest teilweise offen ist,
b.) Einlegen der Leiter (2, 3) in den Verdichtungsraum (4), und **gekennzeichnet ist durch** die folgenden Schritte
c.) Positionieren des mindestens einen Leiterstranges (20) an dem Rückhalteelement (14), insbesondere Positionieren des Leiterstrangs auf einer von einer Schiebefläche (8) wegweisenden Seite eines an einem Schiebelement (18, 18') vorstehenden Elements (14),
d.) Erstellen einer Schweissposition des Verdichtungsraums (4) und Fernhalten des Leiterstrangs (20) von dem Verdichtungsraum (4) in der Schweissposition,
e.) Beaufschlagen der Leiter (2, 3) mit Ultraschallschwingungen.

10. Verfahren gemäss Anspruch 8, wobei das Rückhalteelement (14) aus der Einlegeposition in eine Schweissposition bewegt wird und dabei die relative Anordnung von den Leitern (2, 3) und dem mindestens einen Leiterstrang (20) erhalten bleibt.

11. Verfahren gemäss Anspruch 9 oder 10, wobei eine Schutzhaube (10) über den Verdichtungsraum (4) bewegt wird, so dass dieser in der Schweissposition abgedeckt ist, wobei die Leiter (2, 2', 3, 3') aus einem Aussenbereich in den Verdichtungsraum (4) gelangen, und der Leiterstrang (20) von einem Aussenbereich (25) der Schutzhaube (10) in die Schutzhaube (10), und bevorzugt wieder hinaus, gelangt.

12. Verfahren gemäss Anspruch 11, wobei die Leiter (2, 3, 2', 3') durch mindestens einen ersten Durchlass (11) in der Schutzhaube (10) an den Verdichtungsraum (4) verlaufen, und die Leiter (2, 3, 2', 3') insbesondere mit mindestens einer Anlegekante (13) ausgerichtet werden, und wobei der mindestens eine Leiterstrang (20) durch mindestens eine weitere Anlegekante (19) ausgerichtet wird, die bevorzugt in mindestens einem weiteren Durchlass (12) der Schutzhaube (10) angeordnet ist.

13. Verfahren gemäss einem der Ansprüche 9 bis 12, wobei Leiter (2, 3, 2', 3') von zwei gegenüberliegenden Seiten in den Verdichtungsraum (4) geführt werden, und die Leiter (2, 3, 2', 3') in Längsrichtung miteinander verbunden werden.

14. Verfahren gemäss einem der Ansprüche 9 bis 13, wobei der Leiterstrang (20) mindestens einen länglichen Leiter umfasst, der während des Verbindens an dem Verdichtungsraum (4) vorbeigeführt ist.

15. Verfahren gemäss einem der Ansprüche 9 bis 14, wobei eine ersten Gruppe von Leitern (2', 3') mindestens zweier Kabel (32, 33), die von gegenüberliegenden Seiten an den Verdichtungsraum (4) herangeführt sind, in den Verdichtungsraum eingelegt (4) wird, insbesondere mindestens eine zweite Gruppe von Leitern (2, 3) so positioniert wird, dass sie durch das Rückhalteelement (14) von dem Verdichtungsraum (4) ferngehalten werden, eine erste Schweissverbindung der ersten Gruppe von Leitern (2', 3') hergestellt wird, anschliessend die mit der ersten Schweissverbindung verbundenen Leiter (2', 3') so positioniert werden, dass sie durch das Rückhalteelement (14) von dem Verdichtungsraum (4) ferngehalten werden, die zweite Gruppe von Leitern (2, 3) in den Verdichtungsraum (4) abgelegt und eine zweite Schweissverbindung der zweiten Gruppe von Leitern (2, 3) hergestellt wird.

16. Verfahren gemäss einem der Ansprüche 9 bis 15,
wobei
in einem ersten Schritt zwischen Leitern (2') zweier Kabel (32), die von einer ersten Seite an den Verdichtungsraum (4) herangeführt werden und Leitern (3') eines dritten Kabels (33), das von der anderen Seite an den Verdichtungsraum (4) herangeführt ist, ein erster Y-Knoten (29) hergestellt wird, in einem zweiten Schritt der erste Y-Knoten (29) so positioniert wird, dass er durch das Rückhalteelement (14) von dem Verdichtungsraum (4) ferngehalten wird, weitere Leiter (2, 3) der drei Kabel (32, 33) in den Verdichtungsraum (4) eingelegt werden und ein weiterer Y-Knoten (29) hergestellt wird
oder wobei
in einem ersten Schritt zwischen Leitern (2') zweier Kabel (32), die von einer ersten Seite an den Verdichtungsraum (4) herangeführt werden und Leitern (3') zweier weiterer Kabel (33), die von der anderen Seite an den Verdichtungsraum (4) herangeführt werden, ein erster X-Knoten (34) hergestellt wird und in einem zweiten Schritt der erste X-Knoten (34) so positioniert wird, dass er durch das Rückhalteelement (14) von dem Verdichtungsraum (4) ferngehalten wird, weitere Leiter (2, 3) der vier Kabel (32, 33) in den Verdichtungsraum (4) eingelegt werden und ein weiterer X-Knoten (34) hergestellt wird.

17. Verwendung eines Rückhaltelements (14), das an einem Schieberelement (18, 18') angeordnet ist, zum Fernhalten eines Leiterstrangs (20) von einem Verdichtungsraum (4) zur Aufnahme von elektrischen Leitern (2, 3) in einer Vorrichtung zum Ultraschallverbinden der elektrischen Leiter (2, 3) gemäss einem der Ansprüche 1-8.

## Claims

1. Device (1) for ultrasonically connecting electrical conductors (2, 2', 3, 3'), for forming a conductor structure with at least a first and a second conductor strand,
with a compression space (4) for receiving the conductors (2, 3), the compression space (4) being delimited in a welding position by sections of mutually adjoining boundary surfaces (5, 6, 7, 8), which boundary surfaces comprise a working surface (5) of an ultrasound-transmitting sonotrode (15) and an anvil surface (6) arranged opposite the working surface (5),
**characterised in that**
at least one retaining element (14) is provided for keeping at least one conductor strand (20) which is connected to at least part of the conductors (2, 2', 3, 3') away from the compression space (4), the device (1) being designed in such a manner that the retaining element (14) keeps the conductor strand (20) away from the compression space (4) at least during the ultrasonically connecting, wherein the boundary surfaces comprise a gather surface (8) arranged on a gather element (18, 18') and the retaining element (14) is arranged on the gather element (18, 18').

2. Device according to claim 1, wherein the retaining element (14) is formed as a protruding element on the gather element (18, 18').

3. Device according to claim 1 or 2, wherein the gather element (18, 18') has a mounting region (21) pointing away from the gather surface (8), and the gather element (18, 18') preferably comprises in the mounting region (21) a support surface (23) for the at least one conductor strand (20), which support surface is formed in particular as a countersink in the mounting region (21).

4. Device according to any one of the preceding claims, wherein the gather element (18, 18') has a recess (40) and the device comprises an insert (41, 41') for insertion into the recess (40), on which an abutment surface (23) for the at least one conductor strand (20) is formed.

5. Apparatus according to any one of the preceding claims,
wherein the apparatus comprises a protective hood (10) which is movable over the compression space (4) so that it is covered in the welding position, wherein the protective hood (10) is designed in such a way that the conductors (2, 2', 3, 3') run from an outer region (25) of the apparatus (1) into the compression space (4), when the protective hood (10) covers the compression space (4) in the welding position, and the protective hood (10) being designed in such a way that the conductor strand (20) runs from an outer region (25) of the apparatus (1) into the apparatus (1) when the protective hood (10) covers the compression space (4) in the welding position.

6. Device according to claim 5, wherein the protective hood (10) comprises at least one first passage (11) for passing through the conductors (2, 2', 3, 3') and in particular at least one first contact edge (13) for aligning the conductors (2, 2', 3, 3'), as well as at least one further contact edge (19) for aligning the at least one conductor strand (20), and wherein preferably a further passage (12) is provided through which the conductor strand (20) can be guided.

7. Device according to claim 6, wherein the contact edge (19) for aligning the at least one conductor strand (20) and at least one contact edge (13) for aligning the conductors (2, 2', 3, 3') are parts of a holding device with which the conductors (2, 3) and the conductor strand (20) can be fixed outside the compression space (4), in particular during a welding operation, and can be released again, in particular after a welding operation.

8. Device according to one of the preceding claims, wherein the device (1) comprises a replaceable gather element (18, 18') with a retaining element (14) and the device (1) comprises in particular at least one further gather element without a retaining element (14).

9. Method for ultrasonic bonding of electrical conductors (2, 3), for forming a conductor structure with at least a first and a second conductor strand, in a compression space (4) of an apparatus (1) for ultrasonic bonding according to one of claims 1 to 8,
wherein the compression space (4) is bounded in a welding position at least by sections of boundary surfaces (5, 6, 7, 8), which boundary surfaces (5, 6, 7, 8) comprise a working surface (5) of an ultrasound-transmitting sonotrode (15) and an anvil surface (6), wherein a retaining element (14) is provided for keeping at least one conductor strand (20), which is connected to at least part of the conductors (2, 3), away from the compression space (4),
the method comprising the steps of:
a.) Providing an insertion position of the compression space (4) in which the compression space (4) is at least partially open for inserting the conductors (2, 3) at an insertion opening (9),
b.) Inserting the conductors (2, 3) into the compression chamber (4), and **characterised by** the following steps
c.) Positioning the at least one conductor strand (20) on the retaining element (14), in particular positioning the conductor strand on a side of an element (14) projecting on a gather element (18, 18') facing away from a gather surface (8),
d.) Poviding a welding position of the compression space (4) and keeping the conductor strand (20) away from the compression space (4) in the welding position,
e.) Apply ultrasonic vibrations to the conductors (2, 3).

10. The method according to claim 8, wherein the retaining element (14) is moved from the insertion position to a welding position while maintaining the relative arrangement of the conductors (2, 3) and the at least one conductor strand (20) .

11. Method according to claim 9 or 10, wherein a protective hood (10) is moved over the compression space (4) so that it is covered in the welding position, wherein the conductors (2, 2', 3, 3') pass from an outer region into the compression space (4), and the conductor strand (20) passes from an outer region (25) of the protective bonnet (10) into the protective bonnet (10), and preferably out again.

12. Method according to claim 11, wherein the conductors (2, 3, 2', 3') extend through at least one first passage (11) in the protective hood (10) to the compression space (4), and the conductors (2, 3, 2', 3') are aligned in particular with at least one contact edge (13), and wherein the at least one conductor strand (20) is aligned by at least one further contact edge (19), which is preferably arranged in at least one further passage (12) of the protective bonnet (10) .

13. Method according to any one of claims 9 to 12, wherein conductors (2, 3, 2', 3') are guided into the compression space (4) from two opposite sides, and the conductors (2, 3, 2', 3') are connected to each other in the longitudinal direction.

14. A method according to any one of claims 9 to 13, wherein the conductor string (20) comprises at least one elongate conductor which is guided past the compression space (4) during connection.

15. Method according to any one of claims 9 to 14, wherein a first group of conductors (2', 3') of at least two cables (32, 33), which are led to the compression space (4) from opposite sides, is inserted into the compression space (4), in particular at least a second group of conductors (2, 3) is positioned in such a way that they are kept away from the compression space (4) by the retaining element (14), a first welded joint of the first group of conductors (2', 3') is made, then the conductors (2', 3') connected via the first welded joint are positioned in such a way that they are kept away from the compression space (4) by the retaining element (14), the second group of conductors (2, 3) is deposited in the compression space (4) and a second welded joint of the second group of conductors (2, 3) is made.

16. A method according to any one of claims 9 to 15,
wherein
in a first step a first Y-node (29) is produced between conductors (2') of two cables (32) approaching the compression space (4) from a first side and conductors (3') of a third cable (33) approaching the compression space (4) from the other side, , in a second step the first Y-node (29) is positioned so that it is kept away from the compression space (4) by the retaining element (14), further conductors (2, 3) of the three cables (32, 33) are inserted into the compression space (4) and a further Y-node (29) is produced or wherein
in a first step, a first X-node (34) is produced between conductors (2') of two cables (32) approaching the compression space (4) from a first side and conductors (3') of two further cables (33) approaching the compression space (4) from the other side, and, in a second step, the first X-node (34) is positioned in such a way that it is kept away from the compression space (4) by the retaining element (14), further conductors (2, 3) of the four cables (32, 33) are inserted into the compression space (4) and a further X-node (34) is produced.

17. Use of a retaining element (14) arranged on a gather element (18, 18') for keeping a conductor string (20) away from a compression space (4) for receiving electrical conductors (2, 3) in an apparatus for ultrasonically connecting the electrical conductors (2, 3) according to any one of claims 1-8.

## Revendications

1. Dispositif (1) pour l'assemblage par ultrasons de conducteurs électriques (2, 2', 3, 3'), pour la formation d'une structure de conducteurs avec au moins un premier et un deuxième brin,
avec un espace de compression (4) pour recevoir les conducteurs (2, 3), l'espace de compression (4) étant délimité dans une position de soudage par des sections de surfaces de délimitation (5, 6, 7, 8) adjacentes les unes aux autres, lesquelles surfaces de délimitation comprennent une surface de travail (5) d'une sonotrode (15) transmettant des ultrasons et une surface d'enclume (6) disposée en face de la surface de travail (5),
**caractérisé en ce que**
au moins un élément de retenue (14) est prévu pour tenir à distance de l'espace de compression (4) au moins un brin (20) qui est relié à au moins une partie des conducteurs (2, 2', 3, 3'), le dispositif (1) étant conçu de telle sorte, que l'élément de retenue (14) maintient le brin (20) à l'écart de l'espace de compression (4) au moins pendant l'assemblage par ultrasons, les surfaces de délimitation comprenant une surface coulissante (8) qui est disposée sur un élément coulissant (18, 18'), et l'élément de retenue (14) étant disposé sur l'élément coulissant (18, 18').

2. Dispositif selon la revendication 1, dans lequel l'élément de retenue (14) est réalisé sous la forme d'un élément en saillie sur l'élément coulissant (18, 18').

3. Dispositif selon la revendication 1 ou 2, dans lequel l'élément coulissant (18, 18') présente une zone de montage (21) s'écartant de la surface coulissante (8), et l'élément coulissant (18, 18') comprend de préférence dans la zone de montage (21) une surface d'appui (23) pour l'au moins un brin (20), qui est réalisée en particulier sous forme d'abaissement dans la zone de montage (21).

4. Dispositif selon l'une des revendications précédentes, dans lequel l'élément coulissant (18, 18') présente un évidement (40) et le dispositif comprend un insert (41, 41') destiné à être inséré dans l'évidement (40), sur lequel est formée une surface d'appui (23) pour le au moins un brin (20).

5. Dispositif selon l'une des revendications précédentes, dans lequel le dispositif comprend un capot de protection (10) mobile au-dessus de l'espace de compression (4) de manière à le recouvrir en position de soudage, le capot de protection (10) étant configuré de manière à ce que les conducteurs (2, 2', 3, 3') s'étendent depuis une zone extérieure (25) du dispositif (1) dans l'espace de compression (4), lorsque le capot de protection (10) recouvre l'espace de compression (4) dans la position de soudage et le capot de protection (10) est conçu de telle sorte que le brin (20) s'étend depuis une zone extérieure (25) du dispositif (1) dans le dispositif (1) lorsque le capot de protection (10) recouvre l'espace de compression (4) dans la position de soudage.

6. Dispositif selon la revendication 5, dans lequel le capot de protection (10) comprend au moins un premier passage (11) pour le passage des conducteurs (2, 2', 3, 3') et en particulier au moins une première arête d'appui (13) pour l'alignement des conducteurs (2, 2', 3, 3'), ainsi qu'au moins une autre arête d'appui (19) pour l'alignement du au moins un brin (20), et dans lequel il est prévu de préférence un autre passage (12) à travers lequel le brin (20) peut être guidé.

7. Dispositif selon la revendication 6, dans lequel l'arête d'appui (19) pour aligner le au moins un brin (20) et au moins une arête d'appui (13) pour aligner les conducteurs (2, 2', 3, 3') sont des parties d'un dispositif de maintien avec lequel les conducteurs (2, 3) et le brin (20) peuvent être fixés à l'extérieur de l'espace de compression (4), en particulier pendant une opération de soudage, et peuvent être libérés à nouveau, en particulier après une opération de soudage.

8. Dispositif selon l'une quelconque des revendications précédentes, dans lequel le dispositif (1) comprend un élément coulissant interchangeable (18, 18') avec un élément de retenue (14) et le dispositif (1) comprend notamment au moins un autre élément coulissant sans élément de retenue (14).

9. Procédé d'assemblage par ultrasons de conducteurs électriques (2, 3), pour la formation d'une structure conductrice avec au moins un premier et un deuxième brin de conducteurs, dans un espace de compression (4) d'un dispositif (1) pour l'assemblage par ultrasons selon l'une des revendications 1 à 8,
l'espace de compression (4) étant, dans une position de soudage, au moins délimité par des sections de surfaces de délimitation (5, 6, 7, 8), lesquelles surfaces de délimitation (5, 6, 7, 8) comprennent une surface de travail (5) d'une sonotrode (15) transmettant des ultrasons et une surface d'enclume (6), un élément de retenue (14) étant prévu pour maintenir à distance de l'espace de compression (4) au moins un brin (20) qui est relié à au moins une partie des conducteurs (2, 3),
ledit procédé comprenant les étapes consistant à
a.) l'établissement d'une position d'insertion de l'espace de compression (4), dans laquelle l'espace de compression (4) est au moins partiellement ouverte pour l'insertion des conducteurs (2, 3) au niveau d'une ouverture d'insertion (9),
b.) l'insertion des conducteurs (2, 3) dans l'espace de compression (4), et **caractérisé par** les étapes suivantes
c.) le positionnement du au moins un brin (20) sur l'élément de retenue (14), en particulier le positionnement du brin sur un côté, s'écartant d'une surface de coulissement (8), d'un élément (14) faisant saillie sur un élément de coulissement (18, 18'),
d.) la création d'une position de soudage de l'espace de compression (4) et le maintien du brin (20) à distance de l'espace de compression (4) dans la position de soudage,
e.) Soumettre les conducteurs (2, 3) à des vibrations ultrasoniques.

10. Procédé selon la revendication 8, dans lequel l'élément de retenue (14) est déplacé de la position d'insertion à une position de soudage, tout en conservant la disposition relative des conducteurs (2, 3) et du au moins un brin (20).

11. Procédé selon la revendication 9 ou 10, dans lequel un capot de protection (10) est déplacé au-dessus de l'espace de compression (4) de sorte que celui-ci est recouvert dans la position de soudage, les conducteurs (2, 2', 3, 3') parvenant d'une zone extérieure dans l'espace de compression (4), et le brin (20) parvenant d'une zone extérieure (25) du capot de protection (10) dans le capot de protection (10), et de préférence à nouveau hors de celui-ci.

12. Procédé selon la revendication 11, dans lequel les conducteurs (2, 3, 2', 3') s'étendent à travers au moins un premier passage (11) dans le capot de protection (10) vers l'espace de compression (4), et les conducteurs (2, 3, 2', 3') sont alignés en particulier avec au moins un bord d'appui (13), et dans lequel le au moins un brin (20) est aligné par au moins un autre bord d'appui (19), qui est disposé de préférence dans au moins un autre passage (12) du capot de protection (10).

13. Procédé selon l'une des revendications 9 à 12, dans lequel des conducteurs (2, 3, 2', 3') sont amenés dans l'espace de compression (4) par deux côtés opposés, et les conducteurs (2, 3, 2', 3') sont reliés entre eux dans la direction longitudinale.

14. Procédé selon l'une quelconque des revendications 9 à 13, dans lequel le brin (20) comprend au moins un conducteur allongé qui est passé devant l'espace de compression (4) pendant l'assemblage.

15. Procédé selon l'une des revendications 9 à 14, dans lequel un premier groupe de conducteurs (2', 3') d'au moins deux câbles (32, 33) amenés par des côtés opposés à l'espace de compression (4) est inséré (4) dans l'espace de compression, en particulier au moins un deuxième groupe de conducteurs (2, 3) est positionné de manière à être maintenu à distance de l'espace de compression (4) par l'élément de retenue (14), on réalise une première soudure du premier groupe de conducteurs (2', 3'), on positionne ensuite les conducteurs (2', 3') reliés à la première soudure de manière à ce qu'ils soient maintenus à distance de l'espace de compression (4) par l'élément de retenue (14), on dépose le deuxième groupe de conducteurs (2, 3) dans l'espace de compression (4) et on réalise une deuxième soudure du deuxième groupe de conducteurs (2, 3).

16. Procédé selon l'une des revendications 9 à 15,
dans lequel, dans une première étape, un premier noeud en Y (29) est réalisé entre des conducteurs (2') de deux câbles (32) amenés par un premier côté à l'espace de compression (4) et des conducteurs (3') d'un troisième câble (33) amené par l'autre côté à l'espace de compression (4), dans une deuxième étape, le premier noeud en Y (29) est positionné de manière à être maintenu à distance de l'espace de compression (4) par l'élément de retenue (14), d'autres conducteurs (2, 3) des trois câbles (32, 33) sont insérés dans l'espace de compression (4) et un autre noeud en Y (29) est réalisé
ou dans lequel dans une première étape, un premier noeud en X (34) est réalisé entre des conducteurs (2') de deux câbles (32) qui sont amenés d'un premier côté à l'espace de compression (4) et des conducteurs (3') de deux autres câbles (33) qui sont amenés de l'autre côté à l'espace de compression (4), et dans une deuxième étape, le premier noeud en X (34) est positionné de manière à être maintenu à l'écart de l'espace de compression (4) par l'élément de retenue (14), d'autres conducteurs (2, 3) des quatre câbles (32, 33) sont insérés dans l'espace de compression (4) et un autre noeud en X (34) est réalisé.

17. Utilisation d'un élément de retenue (14) disposé sur un élément coulissant (18, 18') pour maintenir un brin conducteur (20) à distance d'un espace de compression (4) destinée à recevoir des conducteurs électriques (2, 3) dans un dispositif d'assemblage par ultrasons desdits conducteurs électriques (2, 3) selon l'une quelconque des revendications 1 à 8.
